# NOUVEAU FASCICULE DE BREVET EUROPEEN

(11) **EP 2 867 960 B2**
(45) Date de publication et mention de la décision concernant l'opposition: **08.03.2023**
(45) Mention de la délivrance du brevet: 01.05.2019
(21) Numéro de dépôt: 13744634.0
(22) Date de dépôt: 26.06.2013
(51) Int. Cl.: H02G 1/12

(54) **DISPOSITIF DE DÉNUDAGE DE CÂBLES ÉLECTRIQUES UTILISANT DES DIODES LASER VIOLETTES OU BLEUES**
VORRICHTUNG ZUM ABISOLIEREN VON ELEKTRISCHEN KABELN MIT VIOLETTEN ODER BLAUEN LASERDIODEN
DEVICE FOR STRIPPING ELECTRIC CABLES USING VIOLET OR BLUE LASER DIODES

(30) Priorité: 29.06.2012 FR 1256207
(43) Date de publication de la demande: 06.05.2015
(73) Titulaire: Laselec, 31100 Toulouse (FR)
(72) Inventeur: REVERSAT, Fabien, F-31770 Colomiers (FR); ROUGIER, Stéphane, F-31450 Pompertuzat (FR); BOUVET, Pierre, F-31000 Toulouse (FR)
(74) Mandataire: Santarelli
(86) Numéro de dépôt international: PCT/FR2013/051490
(87) Numéro de publication internationale: WO 2014/001716

(56) Documents cités:
- FR-A1- 2 690 015
- JP-A- 2008 234 917
- US-A- 4 761 535
- US-A- 5 837 961

## Description

La présente invention concerne un dispositif à LASER pour le dénudage de câbles électriques.

Un câble électrique monobrin comprend usuellement une âme conductrice et une gaine isolante entourant le conducteur sur toute la longueur de celui-ci, ladite gaine isolante pouvant être constituée de plusieurs couches, par exemple d'une couche interne en Kapton^{®} et une couche externe en Téflon^{®}. Un câble multibrin comprend usuellement plusieurs brins constitué chacun par un conducteur et une gaine isolante individuelle, l'ensemble des brins étant entouré par une tresse métallique de blindage puis par une gaine isolante commune (couche de Kapton^{®} et couche d'isolant en Téflon^{®} par exemple). Pour raccorder un câble à un dispositif électrique quelconque, il convient de dénuder une extrémité du câble, c'est-à-dire d'en retirer la gaine isolante sur une longueur donnée à partir de cette extrémité pour mettre à nu le conducteur, sans endommager celui-ci. Le dénudage d'une extrémité d'un câble multibrin consiste aussi à retirer la gaine isolante commune sur une longueur donnée à partir de cette extrémité, en prenant soin de ne pas endommager la tresse métallique de blindage et les gaines isolantes individuelles des divers brins. Dans toute la description, on entend par "dénudage" l'action de dénuder une extrémité d'un câble. Le dénudage des câbles est une opération particulièrement fréquente dans le domaine de l'aéronautique, un aéronef étant équipé de plusieurs centaines de kilomètres de câbles pour le contrôle et le fonctionnement des divers systèmes de l'aéronef, et ces câbles pour la plupart doivent être dénudés a leurs deux extrémités opposées pour permettre la connexion du câble à divers terminaux. Dans le cadre d'opérations de maintenance des aéronefs, il est fréquent que les techniciens aient à remplacer un câble défectueux ; il est dans ce cas plus avantageux de dénuder les extrémités du câble de remplacement in situ, c'est-à-dire dans l'aéronef, lieu particulièrement exigu. Le dénudage in situ est parfois inévitable, par exemple lorsqu'il est impossible de connaître à l'avance la longueur du câble (tel est le cas d'un câble multibrin qui suit un circuit en zigzag). Il existe donc, notamment dans l'industrie aéronautique, un besoin de disposer de dispositifs de dénudage de câble portatifs.

Il existe des dispositifs de dénudage mécaniques comprenant deux lames circulaires ou en V, en regard et articulées l'une à l'autre, permettant de couper par cisaillement la gaine entourant le conducteur du câble. Ces dispositifs mécaniques présentent divers inconvénients.

Chaque paire de lames est adaptée à une taille et un type de câble donné, il convient donc de disposer de toute une batterie de lames pour pouvoir dénuder les divers câbles utilisés par exemple dans un aéronef. L'utilisation par erreur d'une paire de lames ne correspondant pas au câble à dénuder peut entraîner soit un retrait incomplet de la gaine isolante et donc une mauvaise connexion du câble au terminal, soit la coupure de certains fils du conducteur du câble, avec pour conséquences une diminution de sa résistance mécanique, une augmentation de sa résistance électrique (par diminution de sa section de conduction) susceptible de générer des points chauds, l'ensemble de ces défauts pouvant conduire à la rupture totale du câble. Agissant par contact, les lames ont tendance à s'user et doivent être remplacées régulièrement. En outre, les câbles utilisés dans le domaine de l'aéronautique présentent des gaines isolantes de plus en plus fines, ce afin de diminuer la masse embarquée dans l'aéronef. Les tolérances d'usinage actuelles ne permettent pas de fabriquer des lames (à tout le moins à un coût acceptable) aptes à dénuder de façon fiable des câbles récents dont la gaine isolante est par exemple formée d'une très fine couche de Kapton^{®} uniquement. Enfin, les dispositifs mécaniques ne sont pas adaptés au dénudage de câbles dont la section n'est pas circulaire et notamment au dénudage de câbles multibrins ou de câbles torsadés.

Il existe également des dispositifs de dénudage thermique dotés de lames chauffantes venant brûler la gaine isolante. Ces dispositifs ne donnent pas satisfaction car ils laissent souvent des dépôts d'isolant sur le conducteur dénudé et ne permettent pas d'obtenir un dénudage précis.

On connaît aussi des dispositifs de dénudage à LASER, le rayonnement LASER émis venant vaporiser la gaine isolante. S'agissant d'une technologie sans contact, ces dispositifs ne souffrent pas de problèmes d'usure. En outre, ils permettent non seulement de dénuder des câbles, cylindriques ou non -tels les câbles torsadés-, mais aussi de réaliser toutes formes de découpe dans la gaine isolante, par exemple une fenêtre pour une reprise de blindage. Les inconvénients majeurs des dispositifs de dénudage à LASER sont leur coût élevé et leur manque de compacité.

WO 2008084216 décrit un dispositif de dénudage à LASER comprenant :
- une unité de base incluant un LASER à CO₂ émettant un rayonnement LASER dans l'infrarouge,
- un flexible intégrant un guide d'ondes pour la transmission de ce rayonnement LASER ; il est à noter qu'il n'existe actuellement aucun guide d'ondes apte à transmettre un rayonnement infrarouge émis par un LASER à CO₂ ; l'homme du métier n'est donc pas en capacité de réaliser le dispositif divulgué par WO 2008084216 ;
- et une tête de dénudage portable recevant le rayonnement LASER et comprenant
   ◆ une zone de dénudage apte à recevoir l'extrémité d'un câble à dénuder,
   ◆ des moyens optiques aptes à recevoir le rayonnement LASER et à le diriger dans la zone de dénudage, vers le câble et autour de celui-ci suivant une trajectoire de découpage,
   ◆ des moyens d'injection d'un gaz pour le nettoyage des optiques souillées par l'isolant vaporisé,
   ◆ des moyens de contrôle permettant d'ajuster la vitesse de déplacement du rayonnement le long de la trajectoire de découpage ou de surveiller et éventuellement de modifier la puissance du rayonnement LASER émis.

Le dispositif proposé par WO 2008084216 répond à un effort de compacité et à une tentative de réalisation d'un dispositif portable, mais son unité de base reste très encombrante et n'autorise donc pas l'utilisation du dispositif dans des sites très exigus. En particulier, compte tenu de la taille des LASER à CO₂ connus, cette unité de base ne semble pas pouvoir être aisément embarquée dans un aéronef. De même, il est difficile d'envisager d'intégrer un tel dispositif de dénudage dans une machine de marquage de câbles. De plus, la présence du flexible reliant la tête de dénudage à l'unité de base gêne la maniabilité de ladite tête de dénudage. En outre, aucun contrôle de la profondeur de champ du rayonnement LASER émis n'est fourni, de sorte que le conducteur électrique n'est préservé que s'il réfléchit suffisamment le rayonnement LASER. Pour les mêmes raisons, il est impossible avec un tel dispositif connu, de retirer la gaine isolante commune d'un câble multibrin, sans risquer d'inciser également la tresse de blindage dudit câble ou la gaine isolante individuelle de l'un de ses brins.

FR 2 690 015 A1 (EUROCOPTER FRANCE [FR]) 15 octobre 1993 (1993-10-15) divulgue un dispositif de dénudage de câbles électriques avec un LASER à Argon.

On connaît des LASER à gaz, des LASER chimiques, des LASER solides (à cristaux), des LASER à semi-conducteurs regroupés ici sous l'appellation "diodes LASER".

Seules l'utilisation de LASER à gaz (en l'occurrence des LASER à CO₂, des LASER à Excimère et des LASER à Argon) a jusqu'ici été envisagée pour le dénudage des câbles électriques. L'utilisation de ces LASER qui émettent soit dans l'infrarouge soit dans l'ultraviolet permet de garantir l'intégrité des conducteurs des câbles, le cuivre réfléchissant 99 % d'un tel rayonnement. La longueur d'onde de 10,6µm usuellement émise par les LASER à CO₂ s'est révélée tout à fait pertinente pour le dénudage de câbles non seulement car le cuivre, utilisé généralement comme conducteur, présente un seuil de dommage élevé à cette longueur d'onde mais aussi car la plupart des matériaux isolants utilisés pour gainer les câbles présente un seuil de dommage faible à cette longueur d'onde. Le phénomène est inversé dans le cas de la longueur d'onde proche infrarouge 1,064µm émise par un LASER solide de type Nd:YAG.

La technologie de dénudage par LASER à CO₂ souffre pourtant de nombreux inconvénients :
∘ Les LASER CO₂ sont relativement volumineux (100mm x 100mm x 300mm environ pour les modèles les plus compacts, de puissance 10W). Tous les dispositifs à LASER à CO₂ connus à ce jour sont très encombrants. Ils ne permettent donc pas un dénudage in situ.
∘ Leur consommation électrique est élevée.
∘ Bien que leur qualité de faisceau puisse être élevée (M2 proche de 1), leur pouvoir de focalisation est faible. Il en résulte que ces dispositifs ne sont pas aptes à générer un petit spot permettant un dénudage précis.
∘ La longueur d'onde infrarouge de 10,6µm impose l'utilisation d'optiques spéciales, comme des optiques en ZnSe beaucoup plus onéreuses et sensibles que le verre. Ces optiques posent notamment des problèmes de nettoyage en raison de leur faible dureté.
∘ La longueur d'onde 10,6µm n'est pas visible à l'œil, ce qui complique l'alignement du faisceau. Il faut par exemple utiliser un faisceau visible spécifiquement pour l'alignement.

La technologie de dénudage par LASER à Excimère émettant dans le domaine de l'ultraviolet (longueur d'onde 0,193µm, 0,248µm, 0,308µm ou 0,351µm pour les gaz les plus utilisés) permet de produire des coupes fines et précises de la gaine des câbles. Ces sources LASER sont cependant extrêmement volumineuses. Elles sont aussi très onéreuses, non seulement à l'achat mais également à l'entretien car elles nécessitent un renouvellement très fréquent du mélange gazeux, par ailleurs très toxique. Ces sources LASER sont pulsées et génèrent un faisceau de forte puissance crête qui, s'il incise efficacement la gaine des câbles, est également capable d'endommager l'âme métallique.

Un exemple d'utilisation pour le dénudage de câbles d'un laser émettant dans l'ultraviolet, c'est-à-dire avec une longueur d'onde inférieure à 380nm, est fourni par FR 2 690 015. De préférence, le LASER est un LASER à argon. Il est à noter qu'il existe des LASERS à argon ayant une longueur d'onde de 351 nm ou de 364 nm.

L'utilisation des diodes LASER n'est *a priori* pas envisageable pour diverses raisons : les diodes LASER connues génèrent un faisceau dont la longueur d'onde n'est pas favorable et qui est, soit de trop faible puissance, soit de mauvaise qualité. En effet, les diodes LASER les plus répandues émettent typiquement dans le domaine du proche infrarouge (longueurs d'onde comprises entre 0,7µm et 1,8µm), domaine dans lequel la gaine des câbles est très diffusante. Ces diodes s'avèrent donc très peu efficaces pour le dénudage de câbles. Pour compenser cette faible efficacité, une puissance élevée serait nécessaire. Des diodes LASER multi-éléments de grande puissance sont aujourd'hui disponibles. Mais ces dernières émettent un faisceau de mauvaise qualité, c'est-à-dire un faisceau ayant un faible pouvoir de focalisation, précisément parce qu'elles sont multi-éléments c'est-à-dire constituées de nombreux éléments émetteurs, qui ne permettent pas de générer de façon simple un spot focalisé intense de petite taille (nécessaire au dénudage de câble). C'est la raison pour laquelle les diodes LASER sont principalement utilisées pour des applications de soudure ou d'éclairage. Elles paraissent *a priori* peu compatibles avec une application d'usinage, qui exige de la précision, telle qu'une application de dénudage de câbles électriques.

L'invention vise à pallier ces inconvénients, en proposant un dispositif de dénudage à LASER compact et réellement portatif -afin de pouvoir être utilisé dans un site exigu tel un aéronef ou encore de pouvoir être intégré dans une machine de marquage de câbles connue-. Le dispositif doit également permettre de dénuder des câbles monobrins cylindriques de tous diamètres de façon sûre et fiable, c'est-à-dire sans risque d'endommager le conducteur du câble et avec l'assurance qu'aucun dépôt d'isolant ne subsiste. Dans une version avantageuse, l'invention vise également à fournir un dispositif de dénudage permettant de dénuder tout type de câbles électriques (câbles cylindriques, câbles multibrins et même câbles en nappe). Un autre objectif de l'invention est de fournir un dispositif dont le coût de revient est équivalent ou inférieur aux dispositifs connus.

Pour ce faire, l'invention propose un dispositif de dénudage de câbles électriques, conforme à la revendication 1.

Avantageusement, chaque source LASER est uniquement constituée d'une diode LASER bleue ou violette.

Les inventeurs ont établi que le niveau élevé de réflexion diffuse que l'on observe sur la plupart des gaines de câble dans le domaine visible et proche infrarouge tend à baisser lorsque la longueur d'onde du faisceau de dénudage se rapproche du domaine ultraviolet. Au-dessous de 0,46µm pour certaines gaines, et au-dessous de 0,41µm pour d'autres, le niveau d'absorption augmente de manière significative (en relation avec la diminution du niveau de réflexion diffuse), ce qui autorise un dénudage efficace à l'aide des diodes LASER de puissance de technologie GaN. Ces diodes LASER ont notamment été développées pour les technologies « Blu-ray Disk » et de projection LASER. Elles sont disponibles sous forme de diodes LASER mono-élément de forte puissance et de qualité de faisceau relativement élevée (même si ces diodes sont généralement multimodes).

Leur faible longueur d'onde et leur qualité de faisceau élevée permettent d'obtenir un point de coupe de petite taille à une distance de travail raisonnable, nécessaire à l'obtention d'un dénudage de qualité.

Plus précisément, on trouve sur le marché des diodes LASER émettant un rayonnement de longueur d'onde égale à 375nm (c'est-à-dire dans l'ultraviolet). Les inventeurs ont établi que ces diodes LASER présentent une puissance trop faible pour l'application envisagée. En outre, leur coût reste assez élevé.

Il existe aussi des diodes LASER émettant un rayonnement de longueur d'onde égale à 445nm ou plus ; ces diodes possèdent une puissance nettement supérieure, une bonne qualité de faisceau, sont moins fragiles, mais elles sont *a priori* moins efficaces car moins favorables pour le conducteur vis-à-vis de leur longueur d'onde. Cependant, les inventeurs ont démontré que cette longueur d'onde, jamais testé à ce jour pour des opérations de dénudage de câbles est finalement compatible avec cette application. Il existe enfin des diodes LASER émettant un rayonnement de longueur d'onde comprise entre 400 et 410nm, par exemple de l'ordre de 405nm. Les inventeurs ont établi que ces diodes offrent un compromis intéressant pour le dispositif selon l'invention en termes de prix, de puissance et de longueur d'onde. De préférence, chaque source LASER comprend donc une diode LASER émettant un faisceau de dénudage de longueur d'onde comprise entre 440nm et 460nm ou comprise entre 400nm et 410nm.

L'utilisation de diodes LASER violettes ou bleues présente de nombreux avantages par rapport aux technologies LASER à CO₂ ou à Excimère ou à argon utilisées précédemment :
∘ L'encombrement des diodes LASER est sans commune mesure avec celui des LASER à gaz : une diode LASER ne mesure que quelques millimètres. Cela permet notamment de disposer plusieurs diodes LASER dans un même dispositif de dénudage pour en augmenter la productivité. Cela permet aussi de concevoir des dispositifs de dénudage beaucoup plus petits, dans lesquels la ou les sources LASER peuvent être montées sur des éléments mobiles. Cela permet enfin la réalisation de dispositifs de dénudage portatifs, pouvant être utilisés in situ.
∘ Leur rendement électrique/optique est très élevé, ce qui réduit significativement la consommation électrique du dispositif de dénudage ; il est dès lors possible de prévoir une alimentation électrique sur batterie.
∘ Les optiques peuvent être en verre ou silice ; elles sont alors beaucoup plus faciles à approvisionner et plus robustes.
∘ La diversité des éléments optiques et optoélectroniques disponibles dans ce domaine de longueurs d'onde, permet l'utilisation de schémas complexes comme un système d'autofocus pour l'asservissement du point de coupe décrit plus loin.
∘ Le faisceau LASER violet ou bleu est visible (contrairement au faisceau ultraviolet du laser à argon de FR 2 690 015 et des LASER à Excimère, et contrairement aux faisceaux infrarouges des lasers à CO₂) ; il est donc très facile à aligner.
∘ Le faisceau LASER peut être focalisé en un point de coupe de très petite taille, ce qui permet de générer une coupe de la gaine isolante de très grande précision, d'optimiser la puissance optique nécessaire et de limiter la profondeur de champ du faisceau de dénudage.

Comme précédemment définie, le dispositif selon l'invention comprend un ou plusieurs faisceaux de dénudage. De préférence, lorsqu'il en comprend plusieurs, chaque faisceau est émis et focalisé par une source LASER et un ensemble optique qui lui sont propres, de sorte que le dispositif comprend autant de sources LASER et d'ensembles optiques et que de faisceaux de dénudage. Cette multiplication des sources est rendue possible par le caractère miniature des diodes laser.

Avantageusement et selon l'invention, le dispositif de dénudage comprend de plus, pour au moins un point de coupe -et de préférence pour chaque point de coupe-, des moyens de direction apte à déplacer ledit point de coupe relativement à une piste de réception de câble selon une trajectoire de coupe prédéfinie. De préférence, ces moyens sont essentiellement mécaniques.

S'il comporte plusieurs points de coupe, le dispositif peut comprendre alors autant d'ensembles mécaniques de direction que de points de coupe, chaque ensemble mécanique permettant de déplacer individuellement le seul point de coupe auquel il est associé, ou, en variante, un seul ensemble mécanique permettant de déplacer conjointement tous les points de coupe.

Avantageusement, le dispositif selon l'invention comprend des moyens mécaniques de direction apte à déplacer au moins un point de coupe autour d'une piste de réception de câble selon une trajectoire circulaire, dans un plan transversal. En d'autres termes, le faisceau tourne autour du câble à dénuder de façon à pratiquer dans sa gaine une incision circulaire.

De préférence, le dispositif selon l'invention comprend des moyens de direction apte à déplacer au moins un point de coupe à la fois autour et le long d'une piste de réception de câble rectiligne, afin de permettre l'exécution d'une coupe en forme de fenêtre pour réaliser une reprise de blindage par exemple.

Avantageusement et selon invention, chaque piste de réception de câble traverse intégralement le dispositif et est munie d'une butée rétractable qui, en position déployée, traverse la piste de réception de câble et ferme ainsi le passage au câble afin de permettre d'en dénuder une extrémité calée contre la butée déployée et qui, en position rétractée, autorise le passage du câble, celui-ci pouvant alors traverser le dispositif afin de permettre d'effectuer une incision dans une zone quelconque du câble (à distance de ses extrémités), par exemple pour réaliser une reprise de blindage, ou afin de pouvoir intégrer un dispositif selon l'invention dans une ligne de fabrication (comprenant par exemple un poste de marquage) dans laquelle le câble circule.

Avantageusement, le dispositif selon invention comprend d'une part plusieurs pistes rectilignes de réception de câble à dénuder, ces pistes s'étendant dans un même plan parallèlement entre elles selon une direction longitudinale X, et d'autre part un ensemble mécanique apte à déplacer au moins un point de coupe selon une direction transversale Y parallèle au plan des pistes de réception de câble et orthogonale à la direction longitudinale X. Ce dispositif permet de dénuder plusieurs câbles dans le cadre d'une même opération de dénudage.

Avantageusement, le dispositif selon l'invention comprend au moins deux faisceaux de dénudage, les points de coupe desdits faisceaux étant situés de part et d'autre d'une piste de réception de câble, dans un même plan de dénudage transversal (plan orthogonal à la direction longitudinale de la piste de réception de câble).

Dans un premier mode de réalisation possible, le dispositif selon invention comprend trois ou quatre faisceaux de dénudage répartis autour d'une piste de réception de câble, chacun des faisceaux de dénudage étant formé par un faisceau primaire émis par une diode laser bleue ou violette dans le plan de dénudage, c'est-à-dire dans un plan orthogonal à la piste de réception de câble, et réfléchi par un miroir pivotant motorisé, les trois ou quatre miroirs pivotants motorisés étant pilotés de façon désynchronisée de sorte que les faisceaux de dénudage ne se croisent pas. Dans le cas d'un dispositif comportant quatre faisceaux de dénudage (et donc quatre diodes et quatre miroirs), les miroirs pivotants motorisés sont de préférence pilotés deux par deux (deux incisions sont donc pratiquées simultanément dans la gaine du câble). Il est à noter que chaque miroir pivotant motorisé fait partie à la fois de « *l'ensemble optique* » et des « *moyens de direction* » tels que précédemment définis, associés à un faisceau de dénudage.

Dans un deuxième mode de réalisation possible, le dispositif selon l'invention comprend trois ou quatre faisceaux de dénudage répartis autour d'une piste de réception de câble, chacun des faisceaux de dénudage étant formé par un faisceau primaire émis par une diode laser bleue ou violette selon une direction parallèle à la piste de réception de câble, et réfléchi par un miroir pivotant motorisé. Comparé au premier mode de réalisation à faisceaux primaires orthogonaux à la piste de réception de câble, ce deuxième mode de réalisation à faisceaux primaires parallèles à la piste de réception de câble est plus compact.

Ce deuxième mode de réalisation peut être décliné en deux variantes. Dans la première variante, le moteur de chaque miroir pivotant motorisé est agencé immédiatement à l'avant du miroir correspondant, l'expression « à l'avant » faisant référence à un sens défini comme suit. Le dispositif comprend un boîtier extérieur ayant une face avant, et une face arrière opposée ; la face avant est celle par laquelle un câble à dénuder peut être introduit dans le dispositif, la piste de réception de câble s'étendant à l'intérieur du boîtier depuis la face avant et de préférence jusqu'à la face arrière. Autrement dit, dans cette première variante, chaque moteur est agencé entre le miroir associé et la face avant du dispositif.

Dans la deuxième variante, chaque miroir pivotant motorisé est associé à un moteur agencé à l'arrière de la diode laser correspondante, le dispositif présentant là encore une face avant par laquelle un câble à dénuder peut être introduit dans un orifice d'entrée de câble. En d'autres termes, dans cette deuxième variante, pour chaque faisceau de dénudage, on trouve successivement le long de la piste de réception de câble, depuis la face avant du dispositif : le miroir pivotant motorisé, la diode laser et le moteur associé au miroir. En déportant ainsi le moteur associé au miroir à l'arrière du dispositif, on déplace le plan de dénudage vers la face avant du dispositif, ce qui est particulièrement avantageux pour un dispositif portatif qui doit être apporté jusqu'au câble à dénuder (et non l'inverse) dans un environnement de câblage exigu.

Avantageusement et selon invention le dispositif comprend, pour chaque piste de réception de câble, un ensemble de maintien pour le maintien d'un câble à dénuder dans la piste de réception de câble, et l'ensemble de maintien comprend un presse-étoupe doté d'un manchon en un matériau élastique étanche à la lumière. La compression du manchon par le presse-étoupe autour d'un câble à dénuder permet de rendre le dispositif étanche à la lumière et d'éviter ainsi tout risque de brûlure de l'opérateur.

De préférence, chaque ensemble de maintien comprend un coulisseau pouvant coulisser selon une direction orthogonale à la piste de réception de câble et comportant au moins deux passages traversants de diamètres internes différents, chaque passage traversant étant muni d'un presse-étoupe avec un manchon en un matériau élastique étanche à la lumière.

Avantageusement, le dispositif comprend des moyens de calibrage aptes à mesurer un diamètre d'un câble à dénuder logé dans une piste de réception de câble et à ajuster la position d'au moins un point de coupe relativement à ladite piste en fonction du diamètre mesuré. Tout moyen approprié peut être utilisé pour obtenir une mesure du diamètre. A titre d'exemple, un organe mécanique comprenant une mâchoire de maintien du câble qui vient pincer le câble et est montée sur un pied à coulisse peut être utilisée. En variante, les moyens de calibrage comprennent un presse-étoupe tel que précédemment décrit. La distance de déplacement du presse étoupe, qui est fonction du diamètre du câble, peut alors être utilisée pour déterminer ce diamètre. En variante un organe à détection optique peut être prévu.

Comme précédemment défini, le dispositif comprend, pour au moins un faisceau de dénudage, un système de monitoring pour le contrôle de la progression du dénudage.

Ce système de monitoring comprend des moyens, tels une ou plusieurs photodiodes, pour la capture et l'analyse d'un signal optique de contrôle émis par un câble visé par ledit faisceau de dénudage, et des moyens de pilotage pour adapter des paramètres de balayage (par exemple angle et/ou vitesse de pivotement d'un miroir pivotant motorisé tel que précédemment décrit) en fonction de résultats d'analyse du signal optique de contrôle. Ce signal optique de contrôle correspond soit au faisceau LASER rétrodiffusé par le câble, soit à une émission lumineuse (fluorescence ou incandescence) générée par une interaction laser/isolant à dénuder.

Ce signal optique de contrôle est de préférence acquis à l'aide d'au moins une photodiode (composant semi-conducteur ayant la capacité de détecter un rayonnement du domaine optique et de le transformer en signal électrique), filtrée ou non spectralement (par exemple une photodiode filtrée infrarouge ne capte que les longueurs du proche infrarouge et est donc insensible à la réflexion intense du faisceau LASER bleu) permettant de mesurer soit une variation de réflectivité du faisceau laser bleu, soit l'incandescence générée par la brûlure de la couche de Kapton^{®} (polyimide) souvent présente sous une gaine supérieure en PTFE ou autre. Une variation de la réflectivité lors d'un dénudage d'un câble dont la gaine isolante est constituée d'un seul type de polymère permet de savoir que l'âme métallique ou bien le blindage métallique a été atteint. La détection d'un crépitement intense lors du dénudage d'un câble dont la gaine isolante comprend une sous-couche de Kapton^{®} permet de la même manière de savoir que le dénudage a été bien effectué localement.

A noter que les photodiodes sont des composants standards peu onéreux. Là encore, leurs très faibles dimensions permettent d'obtenir un dispositif peu encombrant et léger. Dans le cas d'un dispositif comportant plusieurs diodes LASER ou de façon plus générale plusieurs faisceaux de dénudage, on peut prévoir autant de photodiodes de contrôle que de faisceaux de dénudage. Le dispositif obtenu reste suffisamment compact et léger pour être portatif, en vue d'une utilisation dans un aéronef par exemple.

Pour le dénudage de câbles multifilaires ayant une couche en polyimide entre l'âme conductrice et le blindage métallique, une photodiode filtrée ne captant pas les longueurs d'ondes émises par la diode laser peut par exemple être utilisée pour contrôler l'état d'avancement du procédé de dénudage en détectant la présence d'éclats lumineux vifs caractéristiques d'une interaction laser / polyimide. Dès lors que cette couche polyimide est atteinte (ce qui peut arriver si le blindage n'est pas parfaitement continu et opaque) et que des éclats lumineux vifs sont ainsi détectés, le faisceau de dénudage est déplacé pour ne pas risquer de couper les fils conducteurs sous-jacents.

Pour les autres câbles, une photodiode non filtré permet de détecter une différence de réflexion du faisceau de dénudage et donc de permettre de poursuivre l'opération de dénudage jusqu'à ce que l'âme conductrice ou le blindage métallique du câble soit atteint.

Avantageusement, le dispositif comprend un système d'autofocus pour l'asservissement d'un point de coupe, aptes à déterminer la position dudit point de coupe relativement à une surface d'un câble à dénuder logé dans la piste de réception correspondante (piste de réception visée par ledit point de coupe). Dans une forme de réalisation possible, ce système d'autofocus comprend deux faisceaux de contrôle coplanaires au faisceau de dénudage (correspondant au point de coupe asservi) et entourant ce dernier, ainsi que des moyens de capture et d'analyse (tels un capteur linéaire) d'une image de contrôle formée par des rayonnements réfléchis par un câble logé dans la piste de réception (visée par ledit faisceau de dénudage) ; par ailleurs, ladite piste de réception s'étend selon une direction longitudinale qualifiée d'inclinée, qui forme, dans un plan contenant le faisceau de dénudage et la piste de réception, un angle non nul avec une direction normale de dénudage qui serait orthogonale à la direction axiale du faisceau de dénudage. Les faisceaux de contrôle peuvent être générés par des diodes LASER de faible puissance qui leur sont propres. En variante, ils sont générés par la diode LASER générant le faisceau de dénudage, à laquelle est associé un générateur diffractif trois faisceaux permettant de séparer le rayonnement émis par la diode LASER en trois faisceaux (un faisceau central de dénudage et deux faisceaux latéraux de contrôle, de moindre puissance).

Dans une version de l'invention, le système de monitoring ou le système d'autofocus comprennent de plus un cube séparateur de polarisation permettant d'orienter vers la piste de réception de câble le faisceau de dénudage et les éventuels faisceaux de contrôle et de ne transmettre au capteur d'image ou à la photodiode que les rayonnements réfléchis.

De préférence, le dispositif selon l'invention fonctionne sur batterie autonome.

Par ailleurs, il est avantageusement connecté à un dispositif d'aspiration et de filtration des fumées générées par la vaporisation de la gaine des câbles.

Compte tenu de son faible encombrement, le dispositif de dénudage LASER selon l'invention peut être intégré dans une machine de coupe déroulant et coupant à une longueur souhaitée une bobine de câbles. Il peut aussi être intégré dans une machine de marquage de câbles. Dans ces deux cas, il convient préférentiellement d'utiliser un dispositif selon l'invention dont la ou les pistes de réception de câble sont traversantes.

La présente invention s'étend à un dispositif de dénudage LASER caractérisé en combinaison, par tout ou partie des caractéristiques mentionnées ci-avant et ci-après.

D'autres détails et avantages de la présente invention apparaîtront à la lecture de la description suivante, qui se réfère aux dessins schématiques annexés et porte sur des modes de réalisation préférentiels, fournis à titre d'exemples non limitatifs. Sur ces dessins :
- la figure 1 est une vue schématique en coupe longitudinale d'un premier mode de réalisation d'un dispositif de dénudage selon l'invention ;
- la figure 2 est une vue schématique en coupe transversale d'un deuxième mode de réalisation d'un dispositif de dénudage selon l'invention ;
- la figure 3 est une vue schématique en coupe longitudinale d'un troisième mode de réalisation d'un dispositif de dénudage selon l'invention.
- Les figures 4a à 4c représentent, en coupe longitudinale, une partie aval de la vue de la figure 3, dans trois situations différentes (point de coupe focalisé respectivement au-delà, sur ou avant la surface du câble à dénuder) et le signal obtenu en sortie d'un capteur de contrôle dans chacune de ces trois situations ;
- La figure 5 est une vue schématique en coupe transversale d'un mode de réalisation d'un dispositif selon l'invention doté de quatre diodes LASER émettant des faisceaux primaires transversaux ;
- La figure 6 est une vue schématique en coupe transversale d'un mode de réalisation d'un dispositif selon l'invention doté de trois diodes LASER émettant des faisceaux primaires longitudinaux (parallèles à la piste de réception de câble) ;
- Les figures 7 et 8 sont des vues schématiques en coupe longitudinale de deux modes de réalisation d'un dispositif selon l'invention (la figure 7 ne laissant apparaître qu'une partie du dispositif) dotés de plusieurs diodes LASER émettant des faisceaux primaires parallèles à la piste de réception de câble ;
- les figures 8 et 9 sont des vues schématiques en coupe longitudinale de deux modes de réalisation d'un ensemble de maintien à presse-étoupe d'un dispositif selon l'invention ;
- la figure 10 est une vue schématique en perspective éclatée d'un ensemble de maintien à coulisseau et presse-étoupes d'un dispositif selon l'invention.

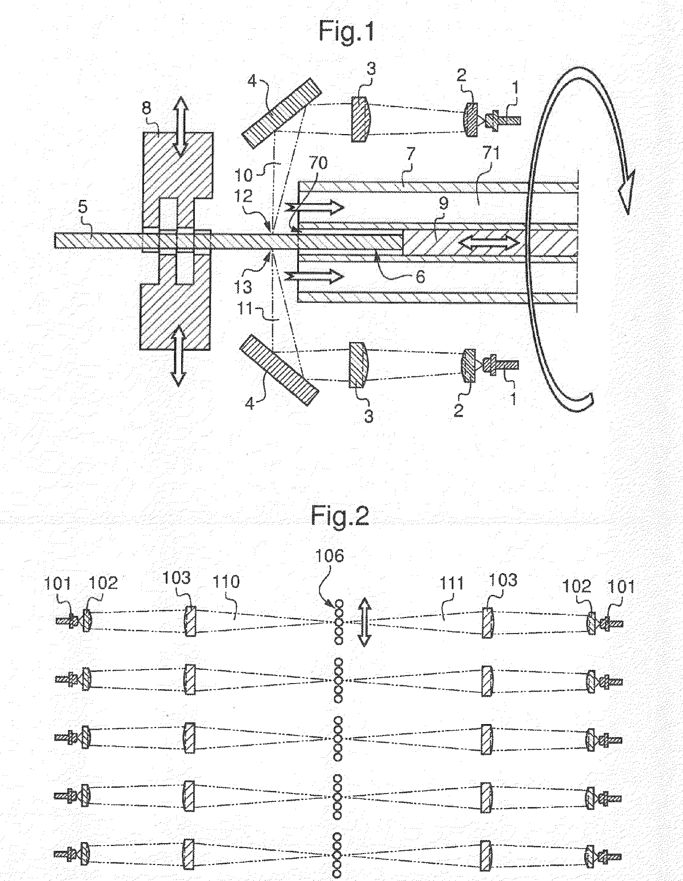

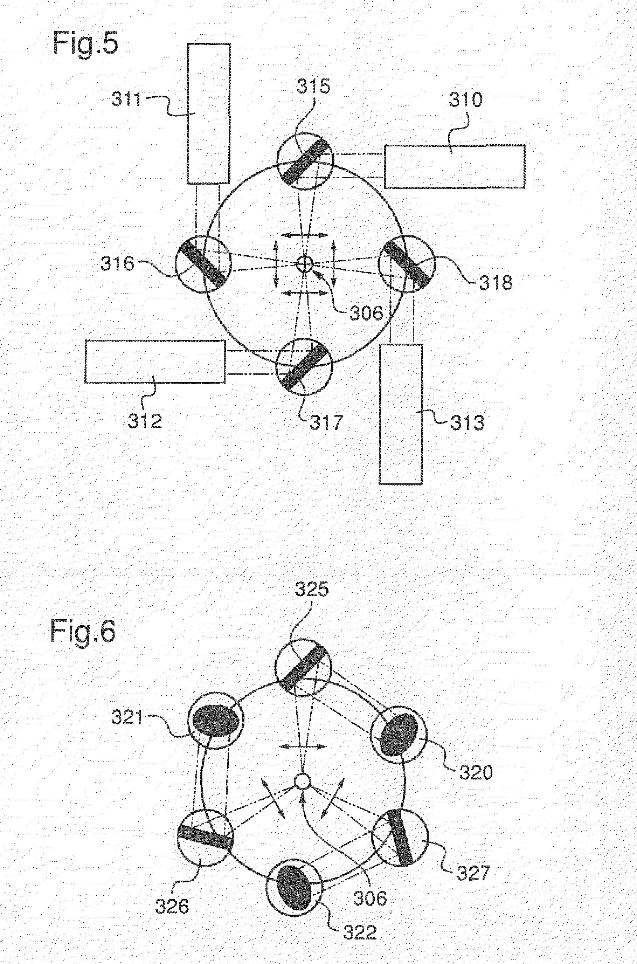

De façon générale, on peut classer les divers modes de réalisation de l'invention en trois familles :
- une première famille de dispositifs comprenant une ou plusieurs têtes de dénudage mobiles par rapport au câble à dénuder ; c'est le cas des dispositifs illustrés aux figures 1 et 2,
- une deuxième famille de dispositifs comprenant une ou plusieurs têtes de dénudage dont une partie seulement (par exemple un miroir) est mobile par rapport au câble à dénuder, la ou les diodes LASER restant fixes dans le dispositif ; tel est le cas des dispositifs illustrés aux figures 5 à 8,
- une troisième famille de dispositifs mixtes comprenant une ou plusieurs têtes de dénudage dont une partie est mobile par rapport au câble à dénuder (comme pour les dispositifs de la deuxième famille), toutes les têtes de dénudage pouvant de plus être intégralement déplacées, en bloc, dans le dispositif, par exemple selon une direction transversale comme illustré à la figure 2 ou selon une direction longitudinale suivant la ou les pistes de réception de câbles afin de pratiquer une incision longitudinale par exemple pour faciliter l'extraction de l'isolant et pour réaliser une fenêtre dans le cadre d'une reprise de blindage.

La figure 1 représente un premier exemple d'un dispositif de dénudage de câbles de la première famille. Ce premier exemple comprend deux têtes de dénudage pour l'émission de deux faisceaux de dénudage 10 et 11 coplanaires. Chaque tête comprend une diode laser bleue ou violette 1, c'est-à-dire une diode émettant avec une longueur d'onde comprise entre 0,40µm et 0,46µm, et un ensemble optique comportant une optique de collimation 2, une optique de focalisation 3 et un miroir de renvoi 4. Le faisceau de dénudage 10 est ainsi focalisé en un point de coupe 12, tandis que le faisceau de dénudage 11 est focalisé en un point de coupe 13. Le dispositif de dénudage illustré comprend par ailleurs une piste 6 de réception d'un câble 5 à dénuder, délimitée d'une part par un guide tubulaire 7 qui présente à cette fin un évidement central 70, et d'autre part par une mâchoire de maintien 8. Le câble 5 est inséré par la gauche de la figure jusqu'à une butée réglable 9 logée dans l'évidement central 70 du guide 7. La position de la butée 9 selon la direction longitudinale relativement au guide 7 peut être ajustée par l'utilisateur par tous moyens appropriés (non représentés). La butée 6 coulisse en effet dans l'évidement 70 du guide tubulaire 7.

On comprendra aisément que la mâchoire 8 qui contribue à définir la piste de réception 6 et à maintenir le câble 5 en position, s'adapte au diamètre du câble à dénuder. La position de chaque point de coupe 12, 13 peut être indexée mécaniquement sur l'ouverture (distance entre les mors) de la mâchoire 8, de sorte à maintenir une distance de travail (distance entre le point de coupe et la surface du câble) sensiblement constante quel que soit le diamètre du câble à dénuder. Un tel système d'indexation (non représenté) constitue des moyens mécaniques de calibrage au sens des revendications annexées.

Les deux têtes de dénudage (diode 1 + optiques 2 et 3 + miroir de renvoi 4, lequel miroir de renvoi 4 reste fixe par rapport à la diode et au faisceau primaire qu'elle génère) du dispositif sont mises en rotation autour du câble à dénuder. Ce mouvement de rotation est réalisé à l'aide de moyens de direction comprenant un moteur dont la vitesse est optimisée en fonction d'un programme de dénudage, d'une information sur le diamètre du câble qui peut être déterminée à l'aide d'un capteur mesurant par exemple le mouvement des mors de la mâchoire (8).

Un tel mode de réalisation à tête(s) de dénudage rotative(s) peut comprendre une ou plusieurs (deux comme illustré, ou plus) têtes de dénudage.

Les dispositifs de la première famille à têtes de dénudage rotatives tels celui de la figure 1 présentent l'avantage d'avoir des points de coupe qui suivent des trajectoires circulaires, c'est-à-dire des trajectoires qui épousent bien la géométrie des câbles, tandis que les points de coupe du dispositif de la première famille illustré à la figure 2 ou des dispositifs de la deuxième famille illustrés aux figures 5 et 6 (décrits plus loin) suivent des trajectoires rectilignes moins favorables. Cela étant, il est possible de doter chaque tête de dénudage de ces dispositifs d'un système d'autofocus tel décrit plus loin pour compenser ce défaut lorsqu'il s'avère critique (selon la nature des câbles à dénuder).Certains paramètres de dénudage tels que la puissance lumineuse des diodes LASER, la vitesse de rotation des têtes optiques ou bien le nombre de rotations sont ajustés au moyen d'un système de monitoring pour le contrôle de la progression du dénudage. Ce système de monitoring, non représenté sur les figures annexées, comprend dans une version simple, un photodétecteur (photodiode) mesurant l'intensité d'un signal optique de contrôle émis par la surface du câble. Dans les dispositifs de la deuxième famille, un photodétecteur est avantageusement prévu pour chaque tête de dénudage.

En effet, l'intensité du flux rétrodiffusé ou généré par fluorescence par la surface du câble (appelé ici « signal optique de contrôle ») varie en fonction du matériau frappé par le faisceau LASER, ce qui permet de savoir par exemple qu'une première couche de la gaine isolante du câble a été usinée complètement et qu'une deuxième couche est en train de l'être ou encore que l'âme métallique du câble est à nue (l'intensité du flux rétrodiffusé variant brutalement lorsque le faisceau laser atteint l'âme métallique du câble après avoir traversé les matériaux polymériques de la gaine isolante). Le signal optique de contrôle est fonction de la course angulaire et longitudinale de faisceau de dénudage.

Il peut être pris en compte en temps réel par des moyens de pilotage aptes à ajuster la puissance LASER ou la vitesse de déplacement de façon à ne pas insister plus que nécessaire et à optimiser la vitesse d'exécution.

Il peut aussi être utilisé dans un schéma à plusieurs passages pour calculer paramètres LASER des passages suivants. Par exemple, un premier passage à vitesse rapide et puissance LASER faible permet de dénuder des zones qualifiées de facile. Le signal optique de contrôle permet de localiser ces zones déjà dénudées et d'éteindre ou de baisser la puissance LASER au niveau de ces zones-là lors du passage suivant. Et ainsi de suite, pour les passages suivants, jusqu'à ce que les 360° de circonférence ou la longueur linéaire souhaitée ait été incisés complètement. On peut de cette manière procéder à un usinage couche par couche d'isolant, sans insister sur les zones faciles de faible épaisseur ou plus proches du point de coupe de chaque faisceau de dénudage.

Cette fonction de monitoring est particulièrement intéressante pour le dénudage de câbles multibrins torsadés blindés (opération appelée aussi « dégainage »), câbles dont le blindage métallique hélicoïdal tressé n'est pas toujours parfaitement opaque (par endroit, le maillage peut être légèrement distendu).

En effet, la section de ce type de câble n'est pas circulaire et présente donc une surface plus ou moins proche du point de coupe de chaque faisceau de dénudage. Il est par ailleurs fréquent que l'isolant supérieur soit enrubanné, et présente des zones composées d'une seule couche de ruban et des zones constituées de deux couches de ruban voire plus. Dans ce contexte, certaines zones se dénudent plus rapidement que d'autres. Si l'on dénude ce type de câble à puissance et vitesse constante, on est amené à insister sur les zones faciles (zones n'ayant qu'une seule couche de ruban ou zones situées au niveau du point de coupe) afin que les zones difficiles (zones ayant plusieurs couches de ruban ou zones situés en amont ou en aval du point de coupe) soient incisées intégralement. En insistant ainsi sur certaines zones, qui peuvent correspondre à des points où le maillage de la tresse de blindage est imparfait, il n'est pas exclu d'endommager la gaine isolante des fils sous-jacents, ce qui ne peut être accepté. En utilisant la fonction de monitoring soit en temps réel, soit dans le cadre d'un schéma à plusieurs passages comme décrit plus haut, soit selon un autre schéma permettant de doser localement l'énergie LASER, on peut garantir un dénudage ou un dégainage parfaitement contrôlé et sûr vis-à-vis de l'intégrité des fils sous-jacents le blindage.

Outre sa fonction de guidage du câble 5 et de la butée réglable 9, le guide tubulaire 7 est également utilisé pour aspirer les fumées dégagées par la vaporisation des matériaux polymériques constituant la gaine. À cette fin, il présente un évidement annulaire 71 (entourant son évidement central 70) ou une pluralité d'évidements de section circulaire ou quelconque, situés autour de la butée 9, dans le(s)quel(s) les fumées peuvent circuler, et sur lequel on vient brancher un dispositif d'aspiration et de filtration (non représenté).

La figure 2 représente un deuxième exemple d'un dispositif de la première famille, qui permet le dénudage collectif d'un grand nombre de câbles chargés sur une platine de translation.

Un tel dispositif comprend au moins une piste 106 de réception de câble et un couple de têtes de dénudage générant deux faisceaux de dénudage 110, 111 dans un plan transversal (plan orthogonal à ladite piste de réception 106) lesdits faisceaux s'étendant de part et d'autre de ladite piste dans ce plan transversal (plan de la figure). Chaque tête de dénudage comprend une diode LASER 101 violette ou bleue, et des optiques 102, 103 de mise en forme du faisceau de dénudage 110 ou 111. Le dispositif comprend de plus des moyens mécaniques de translation de la piste de réception selon une direction transversale (c'est-à-dire orthogonale à la piste de réception 106) et orthogonale à la direction des faisceaux de dénudage. En variante on peut prévoir que les moyens de translation déplacent non pas la piste mais les têtes de dénudage correspondantes selon la direction transversale. Dans les deux cas, ces moyens de translation constituent des moyens mécaniques de direction au sens des revendications annexées.

Plusieurs pistes de réception de câble et couples de têtes de dénudage (ici cinq pistes et cinq couples sont représentés) peuvent être disposés dans le même dispositif de façon à dénuder un grand nombre de câbles à la fois. Ce dispositif permet de plus de dénuder non seulement des câbles monobrins cylindriques mais aussi des câbles en nappe (comme illustré) grâce à la translation transversale des pistes de réception.

Le dispositif de dénudage par diodes LASER violettes ou bleues selon l'invention peut éventuellement comprendre une fonction d'autofocus pour l'asservissement d'un point de coupe sur la surface du câble. Cette fonction présente un grand intérêt pour le dénudage des câbles multifilaires torsadés, de section non circulaire, et dont les fils situés sous la gaine peuvent être endommagés par le faisceau LASER. Dans le cas du dénudage de câbles cylindriques, elle permet aussi de garantir un dénudage parfait (sans aucune lésion du conducteur ni trace d'isolant restant), ou d'adapter le dispositif au diamètre du câble avec une extrême précision.

La fonction d'autofocus permet de travailler avec un faisceau LASER à très courte profondeur de champ et de suivre en temps réel à l'aide d'un calculateur la topologie du câble, pendant que la tête optique se déplace axialement le long du câble ou selon un mouvement circulaire par rapport au câble.

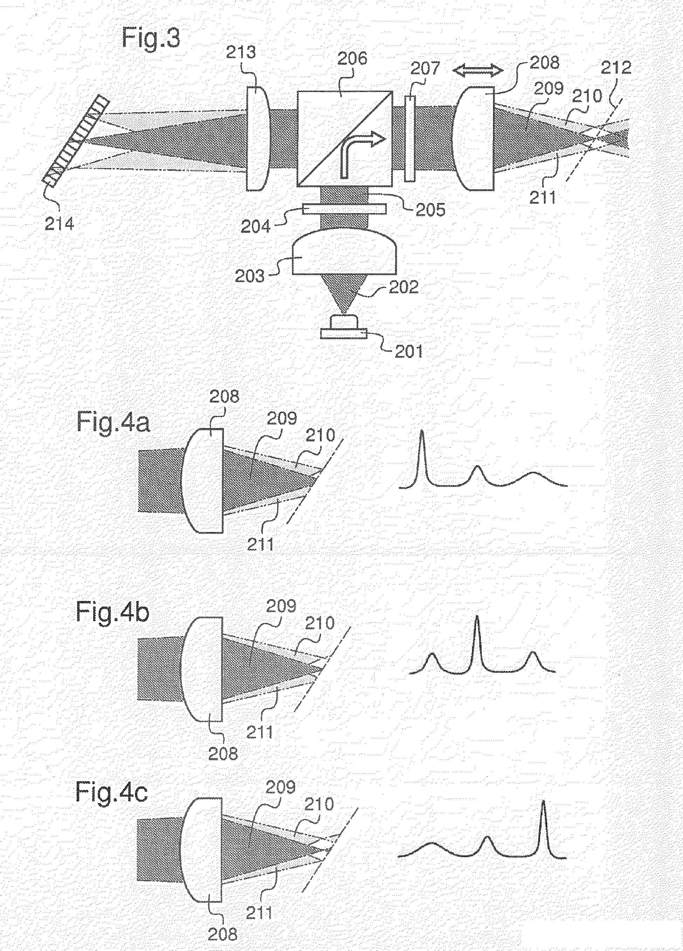

Le mode de réalisation de la figure 3 illustre un principe de fonctionnement d'une telle fonction d'autofocus. La diode LASER violette ou bleue 201 émet un faisceau, dit faisceau primaire 202, qui est collimaté par une optique 203. Le faisceau primaire 202 traverse un générateur diffractif trois-faisceaux 204, sorte d'hologramme permettant de générer deux sous-faisceaux de faible puissance de part et d'autre du faisceau principal non dévié. On observe donc un triple faisceau 205 en sortie du générateur 204. La polarisation optique du triple faisceau LASER est rectiligne et orientée de façon à ce que le triple faisceau soit réfléchi par un cube séparateur de polarisation 206.

Le triple faisceau traverse une lame quart d'onde 207 qui permet de convertir l'état de polarisation rectiligne de l'onde incidente en un état de polarisation circulaire.

Le triple faisceau traverse alors une optique de focalisation active 208, en sortie de laquelle on retrouve trois faisceaux quasiment parallèles : un faisceau central de dénudage 209 de grande puissance, et deux faisceaux latéraux 210, 211, dits faisceaux de contrôle, de faible puissance. Cette optique active 208 permet d'ajuster la position du point de focalisation du faisceau de coupe 209 sur la surface du câble quelle que soit la position de cette dernière. Le faisceau principal central (faisceau de dénudage 209) sert au dénudage du câble, les deux sous-faisceaux adjacents (faisceaux de contrôle 210, 211) ne servent que pour la fonction d'autofocus.

L'optique de focalisation active 208 peut être une simple lentille ou un arrangement de lentilles, monté(e) sur une platine de translation longitudinale (translation selon la direction axiale des faisceaux 209-211) ou bien une lentille à focale variable commandée électriquement.

Les trois faisceaux 209-211 interceptent la surface du câble 212, incliné par rapport à une direction normale de dénudage qui serait orthogonale à la direction axiale des trois faisceaux.

Les trois faisceaux sont rétrodiffusés par la surface du câble 212. Une partie du flux rétrodiffusé traverse la lentille active 208 dans le sens inverse, puis la lame quart d'onde 207. Cette dernière transforme l'état de polarisation circulaire du flux rétrodiffusé en état de polarisation rectiligne croisé par rapport à l'état de polarisation rectiligne du faisceau primaire 202 émis par la diode.

Le faisceau rétrodiffusé est alors transmis par le cube séparateur de polarisation 206 et traverse un objectif d'imagerie 213 (lentille de focalisation par exemple). Un capteur d'image linéaire 214 est disposé dans le plan focal de l'objectif d'imagerie 213, il reçoit l'image de la surface du câble 212 éclairée par les trois faisceaux (faisceau de coupe 209 et faisceaux de contrôle 210, 211).

L'analyse de l'image reçue par le capteur d'image 214 permet d'asservir la position du point de coupe du faisceau de dénudage sur la surface du câble 212. Une illustration du principe est fournie aux figures 4a à 4c. Si le faisceau de dénudage 209 est trop long, c'est-à-dire si le point de coupe est situé au-delà de la surface du câble (ce qui correspond à la figure 4a), alors le faisceau de contrôle 210 est mieux focalisé que le faisceau de contrôle 211 et son point image est donc plus petit et plus intense (signal image de plus grande amplitude). Si le faisceau de dénudage 209 est trop court, c'est-à-dire si le point de coupe est situé avant la surface du câble (figure 4c), alors le faisceau de contrôle 211 est mieux focalisé que le faisceau de contrôle 210 et son point image est donc plus petit et plus intense.

Il faut noter que les deux faisceaux de contrôle 210, 211 étant focalisés de part et d'autre de la zone de coupe, réalisée par le faisceau central de dénudage 209, leur image n'est pas altérée par la dégradation du câble en cours d'usinage.

Ce système permet de connaître à la fois le sens et la proportion dans laquelle la correction doit être apportée, un calculateur électronique permet le pilotage de la lentille active 208 à partir de l'analyse du signal généré par le capteur d'image 214 en temps réel, de sorte à toujours maintenir un point de coupe optimal.

L'image du point de coupe peut aussi être utilisée pour asservir des paramètres de dénudage, comme la puissance de la diode LASER, la vitesse de déplacement de la tête de dénudage, etc.

Un système d'autofocus tel que celui illustré aux figures 3 et 4a à 4c peut aussi être associé à chacune des têtes de dénudage d'un dispositif à têtes rotatives tel celui de la figure 1.

Lorsqu'il comprend plusieurs faisceaux de dénudage, le dispositif selon invention peut intégrer une unique source LASER et un unique ensemble optique permettant de générer tous les faisceaux de dénudage. De préférence, un dispositif selon l'invention comprend autant de diodes LASER et d'ensembles optiques que de faisceaux de dénudage. Cette multiplication des sources est rendue possible par leur miniaturisation.

La figure 5 illustre ainsi un dispositif de dénudage selon invention comportant quatre têtes de dénudage réparties autour d'une piste de réception de câble 306, chaque tête de dénudage comprenant une diode LASER fixe 310 à 313,un miroir pivotant motorisé 315 à 318 et un moteur (non représenté) pour l'entraînement du miroir. Bien entendu, le dispositif pourrait ne comprendre que deux ou trois têtes de dénudage, ou à l'inverse éventuellement plus de quatre têtes de dénudage.

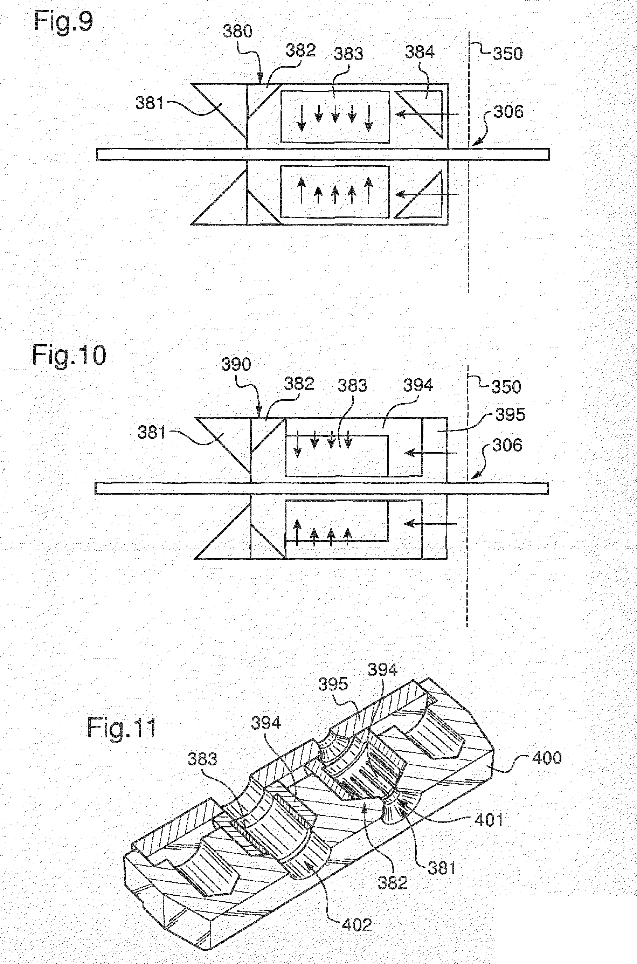

Alors qu'un seul moteur est nécessaire dans l'exemple de la première famille illustré à la figure 1, les dispositifs de la deuxième famille comprennent autant de moteurs que de faisceaux de dénudage. Toutefois, la deuxième famille est plus adaptée à la réalisation de dispositifs portatifs car les pièces mobiles y sont inférieures en nombre et en poids, ce qui autorise l'utilisation de moteurs moins puissants, moins encombrants et plus légers. Un deuxième avantage de la deuxième famille est d'autoriser une tolérance plus importante pour le maintien du câble car on peut prendre un peu de marge sur les angles de balayage des miroirs, de sorte qu'un léger décalage transversal du câble ne pose pas de problème contrairement aux modes de réalisation de la première famille. On peut donc utiliser un système de maintien très simple tel celui représenté aux figures 9 à 11.

Dans le premier exemple de la deuxième famille illustré à la figure 5, chaque diode LASER est agencée de façon à émettre un faisceau primaire transversal dont l'axe est contenu dans le plan de dénudage transversal (en d'autres termes, l'axe de chaque faisceau primaire est orthogonal à la piste de réception de câble 306). Chaque miroir 315 à 318 est monté oscillant (ou pivotant) de sorte que les points de coupe des faisceaux de dénudage générés par réflexion des faisceaux primaires sur ces miroirs sont déplacés sur quelques millimètres suivant les directions indiquées par des flèches doubles sur la figure. Ainsi, chaque diode LASER (et son miroir associé) pratique une incision dans la gaine du câble sur un quart de cercle. De préférence, les têtes de dénudage sont pilotées de sorte que deux diodes LASER consécutives, par exemple les diodes 310 et 311,312 et 313, soient activées en même temps et que, les faisceaux de dénudage qu'elles génèrent ne se rencontrent pas. En pratiquant ainsi deux incisions simultanément, le temps de réalisation d'une opération de dénudage est écourté.

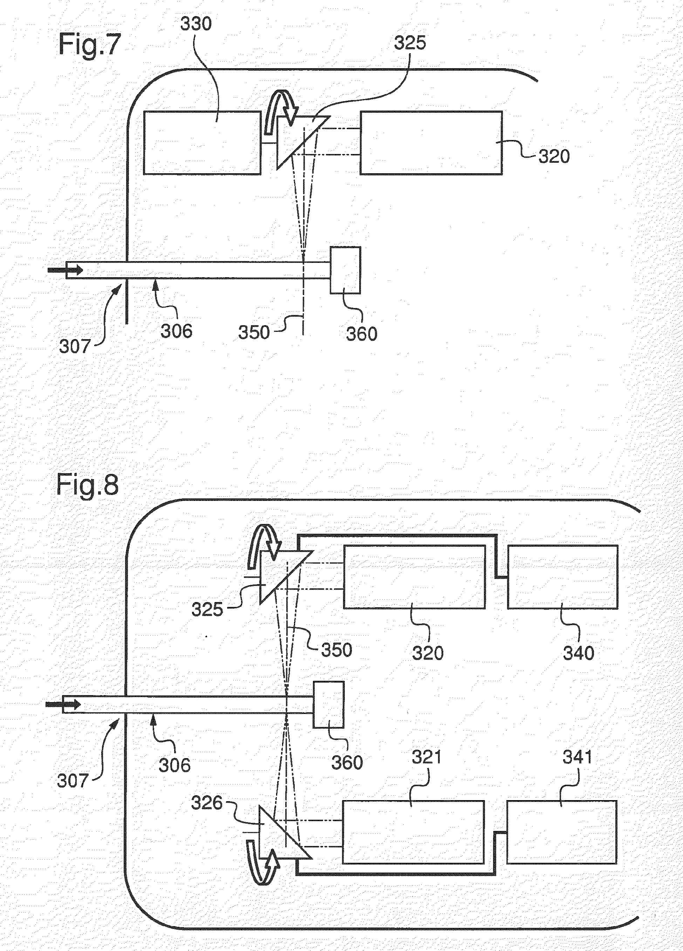

La figure 6 illustre un deuxième exemple d'un dispositif selon l'invention de la deuxième famille c'est-à-dire comportant une pluralité de têtes de dénudage à miroir pivotant et à diode LASER fixe, mais qui émettent des faisceaux primaires longitudinaux, c'est-à-dire parallèles à la piste de réception 306. L'exemple illustré comporte trois diodes LASER 320 à 322. Bien entendu, un dispositif comportant deux, quatre ou plus, diodes LASER à faisceaux primaires longitudinaux est également conforme à l'invention. Dans ce dispositif, chaque diode LASER 320 à 322 est combinée à un miroir pivotant motorisé 325 à 327. Le moteur 341, 342, associé à chaque miroir pivotant est de préférence déporté à l'arrière du dispositif comme illustré à la figure 8, la face avant du dispositif étant définie comme étant la face dotée d'un orifice 307 d'entrée d'un câble à dénuder.

En variante, chaque moteur est agencé à proximité immédiate, à l'avant, du miroir qu'il fait pivoter comme illustré à la figure 7. Cette variante est moins avantageuse que celle de la figure 8 notamment dans le cas d'un dispositif portatif destiné être utilisé dans des environnements de câblage exigus, car le plan de dénudage est nécessairement éloigné de la face avant du dispositif pour permettre le logement des moteurs.

Dans les deux variantes précédemment décrites, une butée rétractable 360 est associée à la piste de réception câble 306. Tout moyen approprié (non représenté) peut être utilisé pour déplacer cette butée entre une position déployée et une position rétractée. En position déployée, c'est-à-dire telle qu'illustrée sur les figures 7 et 8, la butée 360 sert de butée à l'extrémité du câble introduite dans le dispositif. En position rétractée (non représentée), la butée 360 est à distance de la piste de réception de câble 306 et une longueur de câble plus importante peut-être introduite dans le dispositif. Il est avantageux de prévoir une butée à la fois rétractable comme la butée 360 et réglable (de position ajustable) comme la butée 9 illustrée à la figure 1. L'homme du métier peut aisément concevoir une telle butée qui n'apparaît pas sur les dessins annexés.

Il est à noter que, à l'instar des dispositifs de la première famille, chaque tête de dénudage des dispositifs de la deuxième famille peut être équipée d'un système de monitoring (avec une ou plusieurs photodiodes) tel que décrit précédemment et/ou d'un système d'autofocus.

Les exemples de la deuxième famille peuvent être déclinés en une version (troisième famille) où le bloc constitué des trois (ou plus) têtes de dénudage avec balayage des faisceaux de dénudage, est mis en translation long du câble à dénuder, de façon à pouvoir effectuer à la fois une incision annulaire et une ou plusieurs (si l'on allume plusieurs diodes) incisions longitudinales (fentes), pour faciliter l'extraction de l'isolant et réaliser une fenêtre pour une reprise de blindage. De même, le bloc constitué des trois ou quatre têtes de dénudage avec balayage des faisceaux de dénudage peut être mis en translation selon une direction transversale, de façon à dénuder successivement plusieurs câbles comme dans l'illustration de la figure 2.

La figure 11 illustre des moyens de maintien d'un câble à dénuder d'un dispositif selon invention. Ces moyens de maintien comprennent un coulisseau 400 présentant deux passages traversants 401, 402 ayant des diamètres internes minimaux différents afin de permettre d'accueillir des câbles de diamètres compris dans une large plage. Le coulisseau peut être déplacé par tous moyens appropriés (tels que, par exemple, une crémaillère formée dans une face inférieure du coulisseau et une roue dentée correspondante) selon une direction transversale de façon à permettre d'aligner l'un des passages traversant 401,402 avec une piste de réception de câble 306.

Dans chaque passage traversant 401,402 est formé un cône d'insertion 381 et est logé un presse-étoupe 390 tel celui illustré à la figure 10. Ce presse-étoupe comprend un cylindre fendu déformable 394 (voir passage traversant 401), un manchon élastique 383 (retiré du presse-étoupe du passage traversant 401 pour permettre d'observer le cylindre fendu 394), une platine de serrage 395, et un cône d'appui 382 ménagé dans le coulisseau. Le manchon élastique 383 est en un matériau étanche à la lumière, ou à tout le moins étanche aux rayonnements ayant des longueurs d'onde égales à celles des diodes LASER équipant le dispositif. La platine de serrage 395 peut être déplacée selon la direction longitudinale des passages traversants 401, 402. Lorsque la platine de serrage 395 est rapprochée du cône d'appui 382 (suivant la flèche parallèle au câble illustrée à la figure 10), le cylindre fendu 394 est poussé contre le cône d'appui 382 et l'extrémité de ses lamelles (délimitées par les fentes) se rapprochent de la piste de réception de câble, comprimant ainsi radialement le manchon élastique 383 (voir flèches radiales représentée à la figure 10). Le manchon élastique 383 vient alors sertir de façon étanche le câble à dénuder ; le câble et le manchon obturent ainsi complètement l'orifice 307 d'entrée du câble ; aucun rayonnement ne peut sortir du dispositif selon invention (si la piste de réception de câble 306 est traversante, un cache pivotant est prévu sur la face arrière du dispositif pour pouvoir obturer également l'orifice de sortie du câble) et la sécurité de l'opérateur est préservée.

La figure 9 illustre un autre exemple de presse-étoupe pouvant être associée au coulisseau 400. A l'instar du presse-étoupe précédemment décrit, le presse étoupe 380 comprend un manchon en élastomère étanche à la lumière, un cône d'appui 382. En lieu et place du cylindre fendu 394, il comprend un cône de compression 384 qui peut être poussé longitudinalement en direction du cône d'appui 382 par la platine de serrage 395. Là encore, le déplacement de la platine de serrage 395 entraîne la compression radiale du manchon élastique qui vient sertir de façon étanche le câble à dénuder logé dans la piste de réception de câble 306, assurant ainsi à la fois le maintien du câble dans une position de dénudage et l'obturation de l'orifice d'entrée du câble.

L'invention peut faire l'objet de nombreuses variantes par rapport aux modes de réalisation illustrés, dès lors que ces variantes entrent dans le cadre délimité par les revendications.

## Revendications

1. Dispositif de dénudage de câbles électriques, comprenant d'une part au moins un faisceau de dénudage (10, 11 ; 110, 111 ; 209) émis par une source LASER (1 ; 101 ; 201) et focalisé par un ensemble optique (2-4 ; 102, 103 ; 203-208) en un point de coupe (12, 13), , et d'autre part au moins une piste de réception (6 ; 106) d'une portion de câble à dénuder, **caractérisé en ce que** chaque source LASER comprend une diode LASER (1 ; 101 ; 201) émettant un faisceau de dénudage de longueur d'onde comprise entre 400nm et 460nm, et **en ce qu'**il comprend, pour au moins un faisceau de dénudage, un système de monitoring comprenant au moins une photodiode pour la capture et l'analyse d'un signal optique de contrôle émis par un câble visé par ledit faisceau de dénudage, et des moyens de pilotage aptes à adapter des paramètres de balayage en fonction de résultats d'analyse du signal optique de contrôle.

2. Dispositif selon la revendication 1, **caractérisé en ce que** chaque source LASER est une diode LASER (1 ; 101 ; 201) émettant un faisceau de dénudage de longueur d'onde comprise entre 400nm et 410nm ou entre 440nm et 460nm.

3. Dispositif selon l'une des revendications précédentes, **caractérisé en ce qu'**il comprend des moyens mécaniques de direction aptes à déplacer au moins un point de coupe (12, 13) autour d'une piste de réception de câble dans un plan transversal.

4. Dispositif selon l'une des revendications précédentes, **caractérisé en ce qu'**il comprend des moyens mécaniques de direction aptes à déplacer au moins un point de coupe le long d'une piste de réception de câble rectiligne.

5. Dispositif selon l'une des revendications précédentes, **caractérisé en ce que** chaque piste (306) de réception de câble traverse intégralement le dispositif et est munie d'une butée rétractable (360) qui, en position rétractée, autorise le passage du câble, celui-ci traversant alors le dispositif et qui, en position déployée, traverse la piste de réception de câble et ferme ainsi le passage au câble afin de permettre de dénuder une extrémité du câble calé contre la butée déployée,

6. Dispositif selon l'une des revendications précédentes, **caractérisé en ce qu'**il comprend plusieurs pistes (106) rectilignes de réception de câble à dénuder, ces pistes s'étendant dans un même plan parallèlement entre elles selon une direction longitudinale (X), et **en ce que** le dispositif comprend des moyens mécaniques de direction aptes à déplacer au moins un point de coupe ou au moins une piste de réception selon une direction transversale (Y) orthogonale à la direction longitudinale (X) et parallèle au plan des pistes de réception de câble.

7. Dispositif selon l'une des revendications précédentes, **caractérisé en ce qu'**il comprend au moins deux faisceaux de dénudage (110, 111), les points de coupe desdits faisceaux étant situés de part et d'autre d'une piste de réception de câble, dans un même plan de dénudage transversal.

8. Dispositif selon l'une des revendications précédentes, **caractérisé en ce qu'**il comprend quatre faisceaux de dénudage répartis autour d'une piste (306) de réception de câble, chacun des faisceaux de dénudage étant formé par un faisceau primaire transversal émis par une diode laser bleue ou violette (310-313) dans le plan de dénudage, et réfléchi par un miroir pivotant motorisé (315-318), les miroirs pivotants motorisés étant pilotés de façon désynchronisée de sorte que les faisceaux de dénudage ne se croisent pas.

9. Dispositif selon la revendication 1 à 7, **caractérisé en ce qu'**il comprend trois ou quatre faisceaux de dénudage répartis autour d'une piste (306) de réception de câble, chacun des faisceaux de dénudage étant formé par un faisceau primaire longitudinal émis par une diode laser bleue ou violette (320-322) selon une direction parallèle à la piste de réception de câble, et réfléchi par un miroir pivotant motorisé (325-327).

10. Dispositif selon la revendication 9, **caractérisé en ce que** le dispositif présente une face avant par laquelle un câble à dénuder peut être introduit dans un orifice d'entrée de câble, et **en ce que** chaque miroir pivotant motorisé est associé à un moteur agencé à l'arrière de la diode laser correspondante.

11. Dispositif selon l'une des revendications précédentes, **caractérisé en, ce qu'**il comprend, pour chaque piste (306)de réception de câble, un ensemble de maintien pour le maintien d'un câble à dénuder dans la piste de réception de câble, et **en ce que** l'ensemble de maintien comprend un presse-étoupe (394) doté d'un manchon (383) en un matériau élastique étanche à la lumière.

12. Dispositif selon la revendication 11, **caractérisé en ce que** chaque ensemble de maintien comprend un coulisseau (400) pouvant coulisser selon une direction orthogonale à la piste (306) de réception de câble et comportant au moins deux passages traversants (401, 402) de diamètres internes différents, chaque passage traversant étant muni d'un presse-étoupe (394) avec un manchon (383) en un matériau élastique étanche à la lumière.

13. Dispositif selon l'une des revendications précédentes, **caractérisé en ce qu'**il comprend des moyens de calibrage (8) aptes à mesurer un diamètre d'un câble à dénuder logé dans une piste de réception (6) de câble et à ajuster la position d'au moins un point de coupe (12, 13) relativement à ladite piste de réception, en fonction du diamètre mesuré.

14. Dispositif selon l'une des revendications précédentes, **caractérisé en ce qu'**il comprend un système d'autofocus pour l'asservissement d'un point de coupe, aptes à déterminer la position dudit point de coupe relativement à une surface d'un câble à dénuder (212) logé dans la piste de réception correspondante, ce système d'autofocus comprenant deux faisceaux de contrôle (210, 211) coplanaires au faisceau de dénudage (209) et entourant ce dernier, ainsi que des moyens de capture (213, 214) et d'analyse d'une image de contrôle formée par des rayonnements réfléchis par un câble logé dans la piste de réception, ladite piste de réception s'étendant selon une direction longitudinale qualifiée d'inclinée, qui forme, dans un plan contenant la direction axiale du faisceau de dénudage et la direction longitudinale de la piste de réception, un angle non nul avec une direction normale de dénudage orthogonale à la direction axiale du faisceau de dénudage.

15. Dispositif selon l'une des revendications précédentes, **caractérisée en ce qu'**il comprend une batterie autonome.

## Patentansprüche

1. Vorrichtung zum Abisolieren von elektrischen Kabeln, die einerseits zumindest einen Abisolierungsstrahl (10, 11; 110, 111; 209) umfasst, der durch eine LASER-Quelle (1; 101; 201) ausgestrahlt wird, und durch eine optische Baugruppe (2-4; 102; 103; 203-208) auf einen Schneidepunkt (12, 13) fokussiert wird, und andererseits zumindest eine Aufnahmespur (6; 106) für einen abzuisolierenden Kabelabschnitt umfasst, **dadurch gekennzeichnet, dass** jede LASER-Quelle eine LASER-Diode (1; 101; 201) umfasst, die einen Abisolierungsstrahl mit einer Wellenlänge zwischen 400 nm und 460 nm ausstrahlt, und dadurch, dass sie für mindestens einen Abisolierungsstrahl ein Überwachungssystem umfasst, das mindestens eine Photodiode zum Erfassen und Analysieren eines optischen Kontrollsignals umfasst, das durch ein Kabel ausgegeben wird, das von dem Abisolierungsstrahl anvisiert wird, und Steuerungsmittel, die imstande sind, Abtastparameter in Abhängigkeit von Analyseergebnissen des optischen Kontrollsignals anzupassen.

2. Vorrichtung nach Anspruch 1, **dadurch gekennzeichnet, dass** jede LASER-Quelle eine LASER-Diode (1; 101; 201) ist, die einen Abisolierungsstrahl mit einer Wellenlänge zwischen 400 nm und 410 nm, oder zwischen 440 nm und 460 nm ausstrahlt.

3. Vorrichtung nach einem der vorstehenden Ansprüche, **dadurch gekennzeichnet, dass** sie mechanische Ausrichtungsmittel umfasst, die imstande sind, zumindest einen Schneidepunkt (12, 13) um eine Kabelaufnahmespur herum in einer Querebene zu verstellen.

4. Vorrichtung nach einem der vorstehenden Ansprüche, **dadurch gekennzeichnet, dass** sie mechanische Ausrichtungsmittel umfasst, die imstande sind, zumindest einen Schneidepunkt entlang einer geradlinigen Kabelaufnahmespur zu verstellen.

5. Vorrichtung nach einem der vorstehenden Ansprüche, **dadurch gekennzeichnet, dass** jede Kabelaufnahmespur (306) die Vorrichtung vollständig durchläuft, und mit einem einziehbaren Anschlag (360) versehen ist, der in einer eingezogenen Position den Durchgang des Kabels gestattet, wobei dieses dann die Vorrichtung durchläuft, und der in einer ausgefahrenen Position die Kabelaufnahmespur durchquert und somit den Kabeldurchgang schließt, um ein Abisolieren eines Endes des Kabels, das gegen den ausgefahrenen Anschlag festgekeilt ist, zu ermöglichen.

6. Vorrichtung nach einem der vorstehenden Ansprüche, **dadurch gekennzeichnet, dass** sie mehrere geradlinige Aufnahmespuren (106) für ein abzuisolierendes Kabel umfasst, wobei sich diese Spuren in einer gleichen Ebene parallel zueinander in einer Längsrichtung (X) erstrecken, und dadurch, dass die Vorrichtung mechanische Ausrichtungsmittel umfasst, die imstande sind, zumindest einen Schneidepunkt oder zumindest eine Aufnahmespur in einer Querrichtung (Y) zu verstellen, die orthogonal zu der Längsrichtung (X) ist und parallel zu der Ebene der Kabelaufnahmespuren ist.

7. Vorrichtung nach einem der vorstehenden Ansprüche, **dadurch gekennzeichnet, dass** sie zumindest zwei Abisolierungsstrahlen (110, 111) umfasst, wobei die Schneidepunkte der Strahlen auf beiden Seiten einer Kabelaufnahmespur in einer gleichen Abisolierungsquerebene angeordnet sind.

8. Vorrichtung nach einem der vorstehenden Ansprüche, **dadurch gekennzeichnet, dass** sie vier Abisolierungsstrahlen umfasst, die um eine Kabelaufnahmespur (306) herum verteilt sind, wobei jeder der Abisolierungsstrahlen durch einen primären Querstrahl gebildet wird, der durch eine blaue oder violette Laserdiode (310-313) in die Abisolierungsebene ausgestrahlt wird, und durch einen durch einen Motor angetriebenen Drehspiegel (315-318) reflektiert wird, wobei die durch einen Motor angetriebenen Drehspiegel unsynchronisiert gesteuert werden, sodass die Abisolierungsstrahlen einander nicht kreuzen.

9. Vorrichtung nach Anspruch 1 bis 7, **dadurch gekennzeichnet, dass** sie drei oder vier Abisolierungsstrahlen umfasst, die um eine Kabelaufnahmespur (306) herum verteilt sind, wobei jeder der Abisolierungsstrahlen durch einen primären Längsstrahl gebildet wird, der durch eine blaue oder violette Laser-diode (320-322) in eine Richtung parallel zu der Kabelaufnahmespur ausgestrahlt wird, und durch einen durch einen Motor angetriebenen Drehspiegel (325-327) reflektiert wird.

10. Vorrichtung nach Anspruch 9, **dadurch gekennzeichnet, dass** die Vorrichtung eine Vorderseite aufweist, durch die ein abzuisolierendes Kabel in eine Kabeleintrittsöffnung eingeführt werden kann, und dadurch, dass jeder durch einen Motor angetriebene Drehspiegel mit einem Motor verbunden ist, der hinter der entsprechenden Laserdiode angeordnet ist.

11. Vorrichtung nach einem der vorstehenden Ansprüche, **dadurch gekennzeichnet, dass** sie für jede Kabelaufnahmespur (306) eine Haltebaugruppe für das Halten eines abzuisolierenden Kabels in der Kabelaufnahmespur umfasst, und dadurch, dass die Haltebaugruppe eine Stopfbuchse (394) umfasst, die mit einer Muffe (383) aus einem elastischen lichtundurchlässigen Material versehen ist.

12. Vorrichtung nach Anspruch 11, **dadurch gekennzeichnet, dass** jede Haltebaugruppe einen Schieber (400) umfasst, der in eine Richtung orthogonal zu der Kabelaufnahmespur (306) verschoben werden kann und zumindest zwei Durchgänge (401, 402) mit unterschiedlichen Innendurchmessern umfasst, wobei jeder Durchgang mit einer Stopfbuchse (394) mit einer Muffe (383) aus einem elastischen lichtundurchlässigen Material versehen ist.

13. Vorrichtung nach einem der vorstehenden Ansprüche, **dadurch gekennzeichnet, dass** sie Kalibrierungsmittel (8) umfasst, die imstande sind, einen Durchmesser eines abzuisolierenden Kabels, das in einer Kabelaufnahmespur (6) untergebracht ist, zu messen, und die Position zumindest eines Schneidepunkts (12, 13) in Bezug auf diese Aufnahmespur in Abhängigkeit von dem gemessenen Durchmesser zu justieren.

14. Vorrichtung nach einem der vorstehenden Ansprüche, **dadurch gekennzeichnet, dass** sie ein Autofokussystem für die Regelung eines Schneidepunkts, das imstande ist, die Position des Schneidepunkts in Bezug auf eine Oberfläche eines abzuisolierenden Kabels (212), das in der entsprechenden Aufnahmespur untergebracht ist, zu bestimmen, wobei dieses Autofokussystem zwei Prüfungsstrahlen (210, 211) umfasst, die komplanar mit dem Abisolierungsstrahl (209) sind und diesen umgeben, sowie Aufnahme- (213, 214) und Analysemittel eines Prüfungsbilds umfasst, das durch Strahlungen gebildet wird, die durch ein Kabel reflektiert werden, das in der Aufnahmespur untergebracht ist, wobei die Aufnahmespur sich in eine Längsrichtung erstreckt, die als geneigt qualifiziert ist, die in einer Ebene, die die axiale Richtung des Abisolierungsstrahls und die Längsrichtung der Aufnahmespur enthält, einen Winkel ungleich Null mit einer normalen Abisolierungsrichtung orthogonal zu einer axialen Richtung des Abisolierungsstrahls bildet.

15. Vorrichtung nach einem der vorstehenden Ansprüche, **dadurch gekennzeichnet, dass** sie eine autonome Batterie umfasst.

## Claims

1. An electric cable stripping device, including on the one hand at least one stripping beam (10, 11; 110, 111; 209) emitted by a LASER source (1; 101; 201) and focused by an optical assembly (2-4; 102, 103; 203-208) to a cutting point (12, 13), and on the other hand at least one receiving track (6; 106) for receiving a portion of cable to strip, **characterised in that** each LASER source includes a LASER diode (1; 101; 201) emitting a stripping beam of wavelength comprised between 400nm and 460nm, and **in that** it includes, for at least one stripping beam, a monitoring system including at least one photodiode for the capture and the analysis of an optical verification signal emitted by a cable aimed at by said stripping beam, and controlling means adapted to adapt scanning parameters according to results of analysis of the optical verification signal.

2. A device according to claim 1, **characterised in that** each LASER source is a LASER diode (1; 101; 201) emitting a stripping beam of wavelength comprised between 400nm and 410nm or between 440nm and 460nm.

3. A device according to one of the preceding claims, **characterised in that** it includes mechanical directing means adapted to move at least one cutting point (12, 13) around a cable receiving track in a transverse plane.

4. A device according to one of the preceding claims, **characterised in that** it includes mechanical directing means adapted to move at least one cutting point along a rectilinear cable receiving track.

5. A device according to one of the preceding claims, **characterised in that** each cable receiving track (306) passes entirely across the device and is provided with a retractable stop (360) which, in retracted position, allows the passage of the cable, the latter then passing across the device and which, in extended position, crosses the cable receiving track and thus closes the passage to the cable in order to enable stripping of one end of the cable wedged against the extended stop.

6. A device according to one of the preceding claims, **characterised in that** it includes several rectilinear receiving tracks (106) for cables to strip, these tracks extending in the same plane parallel to each other in a longitudinal direction (X), and **in that** the device includes mechanical directing means adapted to move at least one cutting point or at least one receiving track in a transverse direction (Y) at a right angle to the longitudinal direction (X) and parallel to the plane of the cable receiving tracks.

7. A device according to one of the preceding claims, **characterised in that** it includes at least two stripping beams (110, 111), the cutting points of said beams being located on respective opposite sides of a cable receiving track, in the same transverse stripping plane.

8. A device according to one of the preceding claims, **characterised in that** it includes four stripping beams distributed around a cable receiving track (306), each of the stripping beams being formed by a transverse primary beam emitted by a blue or violet laser diode (310-313) in the stripping plane, and reflected by a motor-driven pivoting mirror (315-318), the motor-driven pivoting mirrors being controlled out of synchronisation such that the stripping beams do not cross each other.

9. A device according to claim 1 to 7, **characterised in that** it includes three or four stripping beams distributed around a cable receiving track (306), each of the stripping beams being formed by a longitudinal primary beam emitted by a blue or violet laser diode (320-322) in a direction parallel to the cable receiving track, and reflected by a motor-driven pivoting mirror (325-327).

10. A device according to claim 9, **characterised in that** the device has a front face by which a cable to strip may be inserted into a cable entry aperture, and **in that** each motor-driven pivoting mirror is associated with a motor arranged behind the corresponding laser diode.

11. A device according to one of the preceding claims, **characterised in that** it includes, for each cable receiving track (306), a holding assembly for holding a cable to strip in the cable receiving track, and **in that** the holding assembly includes a gland (394) provided with a sleeve (383) of light-tight elastic material.

12. A device according to claim 11, **characterised in that** each holding assembly includes a slide (400) able to slide in a direction at a right angle to the cable receiving track (306) and including at least two through passages (401, 402) of different inside diameters, each through passage being provided with a gland (394) with a sleeve (383) of a light-tight elastic material.

13. A device according to one of the preceding claims, **characterised in that** it includes calibrating means (8) adapted to measure a diameter of a cable to strip accommodated in a cable receiving track (6) and to adjust the position of at least one cutting point (12, 13) relative to said receiving track, according to the diameter measured.

14. A device according to one of the preceding claims, **characterised in that** it includes an autofocus system for the feedback control of a cutting point, adapted to determine the position of said cutting point relative to a surface of a cable (212) to strip accommodated in the corresponding receiving track, this autofocus system including two verification beams (210, 211) which are coplanar with the stripping beam (209) and surround the latter, as well as means for capture (213, 214) and analysis of a verification image formed by radiation reflected by a cable accommodated in the receiving track, said receiving track extending in a longitudinal direction qualified as inclined, which, in a plane containing the axial direction of the stripping beam and the longitudinal direction of the receiving track, forms a non-zero angle with a normal direction of stripping at a right angle to the axial direction of the stripping beam.

15. A device according to one of the preceding claims, **characterised in that** it includes an autonomous battery.
